# EUROPEAN PATENT APPLICATION

(11) **EP 1 525 919 A1**
(43) Date of publication of application: **27.04.2005**
(21) Application number: 04025004.5
(22) Date of filing: 21.10.2004
(51) Int. Cl.: B01L 3/00, B01J 19/00

(54) **Flow triggering device**

(30) Priority: 23.10.2003 EP 03024419
(71) Applicant: F. Hoffmann-La Roche AG, 4070 Basel (CH); Roche Diagnostics GmbH, 68305 Mannheim (DE)
(72) Inventor: Griss, Patrick, Dr., 8004 Zürich (CH); Siljegovic, Vuk, Dr., 6440 Brunnen (CH); Kopp, Martin, Dr., 6332 Hagendorn (CH)
(74) Representative: Hörschler, Wolfram Johannes, Dipl.-Ing.

(57) **Abstract**

The present invention is related to a microfluidic device capable of conveying a liquid (19) by capillary forces. Said microfluidic device comprises a microfluidic channel system (10, 12, 14; 43, 44; 63, 64) with
i) one liquid supply compartment (81, 91, 101) and ii) a first channel (10) connected to the liquid supply compartment (81, 91, 101), having at least one non-closing valve (1, 65, 73) located downstream of the liquid supply compartment (81, 91, 101) and
ii) a second channel (12, 43, 44). The second channel (12, 43, 44) branches-off from the first channel (10) downstream of the liquid supply compartment (81, 91, 101) but upstream of the at least one non-closing valve (1, 65, 73) and which re-united with the first channel (10) at the location of the non-closing valve (1, 65, 73) to form an outlet channel (14). The second channel (12, 43, 44) does not contain any non-closing or closing valve thus creating an unobstructed liquid flow path connecting the liquid supply compartment (81, 91, 101) with the outlet channel (14).

## Description

### Field of the Invention

The present invention is related to the control of the flow behaviour of liquid driven by capillary forces in microfluidic devices.

### Background of the Invention

WO 90/13034 discloses a capillary flow device and method. Method and devices are provided for carrying out activated partial thromboplastin time (APTT) analysis on a whole blood sample to which no anticoagulant has been added by applying the sample to a capillary track contained in a housing. Further, reagents capable of initiating an APTT-analysis are disclosed, wherein clotting time is measured by the cessation of blood flow in the capillary track. A capillary flow device comprises a housing which contains a continuous capillary pathway comprising an entry port, a first capillary unit, a reagent chamber, a second capillary unit and a venting port. Within said reagent chamber a reagent is present. The first capillary unit comprises a capillary channel from 5 to 15 mm in length, having a width in the range from 0.75 to 2 mm and a height in the range of from 0.05 to 0.125 mm. The reagent chamber comprises a capillary chamber having a length in the range of from 5 to 15 mm and a width in the range of from 3 to 8 mm and a height in the range of from 0.05 to 0.125 mm. The second capillary unit comprises a capillary channel having an initial radius in the range of from 0.05 to 0.175 mm and a final radius that provides capillary flow for a blood sample. The channel has one flat side, the remaining sides of the channel are being formed by flat surfaces or curved surfaces joined without forming angles. All curved surfaces are convex relative to said flat side, wherein at least a portion of the second capillary increases in effective diameter with increasing distance from the reagent chamber. Said reagent comprises an activator for activated partial thromboplastin time and a mixture of phospholipids in amount sufficient to initiate blood clotting. Said capillary track has a total volume in the range of from 20 to 100 µl.

The publication "Microfabricated liquid chromatography columns based on collocated monolith support structures", Journal of Pharmaceutical and Biomedical Analysis 17 (1998) pages 925 - 932, is related to microfluidic devices. The concept disclosed is that miniaturization allows large number of operations to be performed in parallel in a small space, as in electronics. Proceeding with the semiconductor analogy, it is demonstrated that in situ micromachining can be used to simultaneously fabricate millions of micrometer size, particle like structures in multiple liquid chromatography columns on a single wafer. Reduction of this widely used bioanalytical tool to the nanoliter volume, parallel processing, chip formatting is a significant step toward laboratories-on-a-chip.

WO 97/00125 is related to a flow cell for the passive mixing of flowable substances. A flow cell for the passive mixing of at least two flowable substances has an inlet opening for each substance, a common outlet opening and a planar flow bed for mixing the substances. There is provided for each substance a distributor that is arranged between the inlet opening for the substance in question and the flow bed and that divides the substance into a plurality of physically separate thin streams. The distributors supply the thin streams to the flow bed in such a manner that, in flow bed, adjacent thin streams in contact with one another contain different substances. Each distributor according to this solution comprises at least one supply channel, a distribution trough and at least two distribution channels. The supply channel extends from the associated inlet opening for the substance to the associated distribution trough and, in addition, the distribution channels each opening at one end into the distribution trough and at the other end into the flow bed. The result is that substances are able to pass from the corresponding inlet opening through the supply channels, the corresponding distribution trough and the distribution channels into the flow bed.

EP 02 077 317.2 is related to a method and device for detecting the presence of an analyte in a test sample. The method comprises to introduce a test sample in a chamber and to perform the following steps within the chamber: nucleic acids are captured which are contained in the test sample, said capturing being obtained by use of a binding surface located within said chamber. Said binding surface has a high binding affinity for capturing nucleic acids. Than a target nucleic acid sequence is amplified which is part of the captured nucleic acids. Than the presence of the amplified target nucleic acid sequence is detected.

The device comprises a chamber which has a sealable inlet port for introducing into the chamber a liquid containing test sample and a sealable outlet port allowing the exit of liquid from said chamber. The chamber contains a binding surface which is adapted to capture nucleic acids contained in the test sample and said liquid containing test sample flows through the chamber. The chamber has at least one wall which enables heating and cooling of the contents of the chamber. The temperature of said chamber is being modifiable in order to carry out therein a process for amplifying a target nucleic acid sequence which is part of the captured nucleic acids.

A part of the chamber has a zone which allows examination of the chamber contents by optical means for detecting the presence of an amplified target nucleic acid sequence contained in said chamber.

US 2002/0003001 A1 is related to surface tension valves for microfluidic applications. According to this publication a passive valve for use in a microfluidic system is disclosed. Said passive valve comprises a microfluidic first channel having a first inlet and a first outlet. Further, said passive valve comprises a second channel having a second inlet intersecting said first channel between said first inlet and said first outlet. A first region is located at the intersection of said second inlet and the said first channel which has an increased surface tension at said first region. Within said second channel, a first liquid flows having a liquid diving force which cannot overcome the surface tension at said first region and thereby holding flow within said second channel. A second liquid flows within said first channel and contacts said intersection, such that said second liquid contacts said stopped liquid at said first region and allows said first liquid to overcome the surface tension at said first region causing the first and second liquids to flow within said first channel to said outlet. The first region is provided with either a hydrophobic or a hydrophilic coating. In the alternative, said first channel can be made from a hydrophobic material, or as said second channel can be made from hydrophobic material.

US 6,591,852 B1 is related to a fluid circuit component based upon passive fluid dynamics. Methods and apparatuses for controlling fluid flow through microchannels by use of passive valves or stopping means comprised of abrupt microchannel widenings in the microchannels are presented. Such passive fluid flow barriers create pressure barriers impeding flow of solution past the passive fluid flow barriers until enough force is built up to overcome the force of the pressure barrier. Use of such stopping means acting as passive barriers or valves allows the flow of fluids through microchannels to be regulated so as to allow fluids to be mixed or diluted after being introduced via a single channel are to be split into multiple channels without the need for individual pipetting. Flow through the multiple channels can be regulated to allow a series of sister wells or chambers to all fill prior to the fluid flowing beyond anyone of the sister wells or chambers. The filling of sister wells or chambers in this manner allows all wells or chambers to undergo reactions in unison. The use of air ducts in microchannels to prevent trapping of air in the microchannels is also presented.

WO 03/052428 A1 is related to a 3-dimensional microfluidics incorporating passive fluid control structures. The multi-layered microfluidic device is disclosed, which comprises a plurality of substantially planar layers assembled together in sealing relationship. Microfluidic structures are lying in at least two planes corresponding to at least two said planar layers of said microfluidic device and at least one microfluidic structure passes through one or more adjacent planar layers and provides fluid communication between microfluidic structures in different planes. Said microfluidic structures comprises one or more channels, wells, dividers, mixers, valves, air ducts or air vents and at least one of said plurality of planar layers has a hydrophobic surface.

WO 02/072264 A1 is related to a method and a system for microfluidic interfacing to arrays. A method and system is disclosed for providing a fluidic interface to slides bearing micro arrays of bial molecules or other samples immobilized thereon to perform a variety of chemical reactions or processing steps on the slide. An interface device seals against the slide to form a chamber or chambers containing all or a portion of the micro array, providing selective access to portions of the slide. The interface device includes inlet and outlet ports permitting liquid sample and reagents to be introduced and to be removed from the chamber assessing the slide surface pre- and post-array microfluidic circuitry may be included in the interface device or in attachable modules. The system may include one or more compartments for collecting and storing waste fluids.

From the publication "A liquid-triggered liquid microvalve", Transducers 2003, The 12^{th} International Conference on Solid State Sensors, Actuators and Microsystems, Boston, June 8-12, 2003, pages 1562 - 1565, from Jessica Melin, Niclas Roxhed, Guillem Gimenez, Patrick Griss, Wouter van der Vijngaart and Göran Stemme, a surface tension and geometry based liquid-triggered liquid microvalve is disclosed. The simultaneous presence of two liquid plugs from different liquid reservoirs at the valve junction triggers the further movement of the liquids and overcomes the stop valve function of the device. The basis microvalve consists of a Y-junction with two different reservoirs of different liquids connected to two inlet ports and one outlet port as can be derived from figure 2 of this publication. The junction acts as a geometrical stop-valve when liquid from either port 1 or port 2 reaches this point i.e. the junction. Liquid from one inlet port reaching the junction, either by capillary forces or externally driven, waits for liquid from the other inlet port to reach the junction before moving through the outlet, i.e. the movement of the first liquid is triggered by the presence of the second liquid at the junction.

### Summary of the Invention

One object of the present invention is to considerably slow down or even stop volume flow in a microfluidic chamber or channel. Thus, fluid control enables control of chemical or physical processes for example dissolution of dried reagents in said chamber and/or the control of reaction time.

A further object of the present invention is to reliably join a liquid from a multitude of channels with a common inlet port in a bubble-free manner.

According to the present invention a solution as disclosed controls liquid flow in a passive fluidic device having no external actuation or control element. The solution according to the present invention slows down or accelerates liquid flow in the fluidic device according to the present invention. To that end the microfluidic device having at least one non-closing valve and a channel system, within which a channel branches-off from a first channel, which may define a functional chamber and being connected to a fluidic supply, comprises a trigger channel which branches-off from the first channel prior to the non-closing valve and that re-unites with the first-channel at the location of the non-closing valve. By the design of the trigger channel, i.e. its respective length, its number of windings and its flow resistance, said trigger channel can be adapted to specific needs and requirements of the microfluidic device. The length of the trigger channel has a strong impact on the residence time of the liquid within the functional chamber. The longer the distance, through which the liquid to be conveyed has to move until it reaches a valve, such as a geometric or passive valve, known as non-closing valve, the longer is the residence time achievable. By means of the present invention the control of the flow behaviour of liquid driven by capillary forces can be controlled. According to the present solution it is possible either to considerably *slow down* or even stop liquid flow in a functional chamber to increase the residence time of liquid molecules in said chamber, for example to improve the dissolution of dried reagents within the chamber. Further, a bubble-free reliable joining of liquid from a multitude of channels into one channel is achieved. Besides the dissolution of a dried reagent, being contained within a functional chamber, to give an example, the microfluidic device according to the present invention can be used to control chemical reactions of liquids, to enhance incubation time to mix substances by way of liquid flow control or other specific purposes. The trigger channel does not contain any non-closing valve thus creating an unobstructed liquid flow path connecting the liquid supply compartment with the outlet channel. The triggering function of the trigger channel is established by the respective length thereof. In contrast to the solution in US 2002/0003901, in which two channels are disclosed, each of said channels has a passive valve. Thus, fluid flow in both channels is stopped, if no fluid is present in one of the two channels. According to the present invention, fluid flow within the trigger channel is not stopped, if there is no liquid present in the first channel.

The trigger channel, which controls liquid flow through a network of microchannels contained within a substrate of a microfluidic device or microfluidic network may have a width or a diameter, which is smaller as compared to an inlet channel. The length of the respective trigger channel exceeds a length exceeds a length of the flow path of the liquid from the branch-off location to the non-closing valve.

The microfluidic device according to the present invention comprises a functional chamber which is provided for dissolution of dried reagent within the liquid. By means of the design of the trigger channel which is passed by a portion of the liquid flow, the mixing of the liquid being processed with substances such as dried reagent in the functional chamber can be significantly improved by extending the residence time of the liquid within the functional chamber. In one embodiment of the present invention the respective trigger channel branches-off from an outlet channel of said functional chamber. The functional chamber may be arranged as a pillar-array; in a further embodiment of the present invention the respective trigger channel may branch-off from an inlet channel to the respective functional chamber and is directed downstream of a functional chamber and joins an outlet channel downstream of the functional chamber. Thus, in the latter embodiments, non-dissolved or non-processed liquid is used as medium within the branched-off trigger channel instead of processed liquid, within which the dried reagent contained within the functional chamber already have been dissolved.

The trigger channel as disclosed may be used as a trigger channel within a flow splitter device having an array of splitted channels to one of which a trigger channel is assigned. In this flow-splitter device, the openings of each of the microchannels of the array of splitted channel may contain a geometric or passive valve. Said splitted channels may be arranged on both sides of a plane planar substrates overlapping each other, thus forming said geometric passive valves. The first channel is split into the second channel and an array of at least two splitted channels, each of the splitted channels having at least one non-closing valve, located downstream of the branch-off of the second channel and wherein the second channel re-unites with each of the splitted channels of the array downstream of the non-closing valve to form an outlet channel.

Microfluidic devices or microfluidic networks may be etched or replicated, for example by replication by means of plastic injection, hot embossing ceramic replication. One means of replication may be a CD-replication. According to the present invention said portions of the disk may each comprise a functional chamber, to which a respective trigger channel is assigned, to control liquid flow from a reservoir to a containing element. In the alternative, a cascade arrangement of said microfluidic structures may be comprised on said portions, controlling liquid flow from a liquid storage by the length of a respective trigger channel. Depending on the design of the cascade arrangement a number of microfluidic devices may be arranged on said portions of the CD.

### Brief Description of the Drawings

Preferred embodiments of the device and method according to the present invention are described hereinafter as examples referenced to the accompanying figures.
- Figs. 1, 2: show two embodiments of passive geometric valves,
- Fig. 3: shows an inlet and the trigger channel arranged in communication with each other,
- Fig. 4: shows a meniscus preventing for the flow through the inlet channel according to Fig. 3,
- Fig. 5: shows an amount of liquid being stored in the trigger channel,
- Fig. 6: shows the liquid volumes in trigger and inlet channel joining each other forming a common meniscus towards the outlet channel,
- Fig. 7: shows an outlet flow of liquid through an outlet channel,
- Fig. 8: shows a further alternative embodiment of an inlet and a trigger channel arrangement,
- Figs. 9-12: show schematic embodiments for combining a trigger element with a further functional chamber,
- Fig. 13: shows a planar design of flow-splitter device,

- Fig. 14: shows a flow-splitter device within which geometric stop valves are generated,
- Figs. 15-17: show fluidic trigger structures to be replicated in plastic for fluidic evaluation,
- Fig. 18: shows schematically a non-closing valve and

### Description of preferred Embodiments

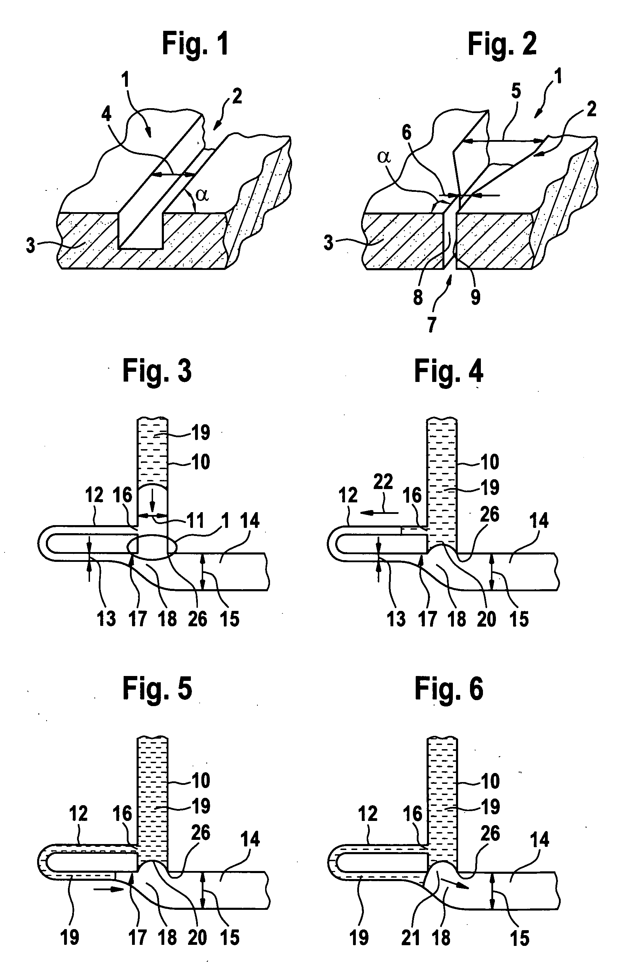

Figs. 1 and 2 show two embodiments of passive geometric valves which constitute functional elements in the context of the present invention and are known per se. In the microfluidic devices, further described hereinafter, a transport of a liquid 19 is established by capillary forces without application of external energy, created by a pumping element or the like. The transfer of liquid 19 within the microfluidic devices further described below is established by capillary forces. The system liquid 19/surface of channels within which the liquid 19 is conveyed, has a contact angle of less than 90°. It is understood, that the respective contact angle as described before can vary according to the type of liquid 19 which is conveyed. Within the system of liquid 19/surface of channels the contact angle can be changed by changing the surface properties of the respective channels, being formed on the front side, or the backside or on both sides of a substrate 3. Materials for the respective substrates are - to give examples - polymeric materials (for example polycarbonate, polystyrol, Poly(methyl methacrylate) that may be replicated, etchable materials (for example silicon, steel, glass) or materials that may be milled conventionally (for example polycarbonate, polystyrol, Poly(methyl methacrylate, steel).

The examples according to figures 1 and 2, respectively show known non-closing valves 1. In a substrate 3 a channel 2 is provided forming a non-closing valve 1. The width 4 of channel 2 in the substrate 3 is constant. In the example given in Fig. 1 the channel 2 has a substantially rectangular shape being a U-profile. The open side of the channel 2 on top of the substrate 3 may be covered by a further substrate which is not shown here. Instead of U-profiled channels 2 according to the embodiment given in Fig. 1 the channels 2 may be shaped as tubes with a continuously closed circumference.

A further example of a channel 2 having a non-constant width is given in Fig. 2. The channel 2 according to Fig. 2 has a first width 5 and a second width 6 within the area of a gap 7. A first surface 8 and a second surface 9 of adjacently arranged substrate 3 limit the gap 7. The gap 7 having a second width 6 constitutes a non-closing valve element 1 such as a geometric valve.

Fig. 3 shows an inlet and a trigger channel of a microfluidic device arranged in liquid communication with each other. An inlet channel 10 which either can have the shape of a tube or of a rectangular formed channel such as given in Fig. 1, conveys a liquid 19. The width or in the alternative the diameter of the inlet channel 10 is depicted by reference numeral 11. At a branch-off location 16, a trigger channel 12 branches off from the inlet channel 10. The liquid 19 contained within the inlet channel 10 is propelled by means of capillary forces. Seen in flow direction of the liquid 19, a non-closing valve 1 such as a geometric valve is provided. In this context a non-closing valve 1 refers to valves in which a liquid 19 is stopped at a specific location of a channel even if the channel at the valve position is opened and is not obstructed by physical means. Geometric valves are non-closing valves, in which the valve function is obtained by a specific curvature or geometry of the channel, whereby the surface characteristics are constant with respect to a channel. Reference numeral 17 depicts the area where the trigger channel 12 and the non-closing valve 1 meet, i.e. constituing a joining location.

At the branch-off location 16 the trigger channel 12 branches off. The trigger channel 12 has a diameter or a width, respectively, labelled with reference numeral 13. The diameter or the width 13 of the trigger channel 12 is smaller as compared to the diameter or the width 11 of the inlet channel 10. The length of said trigger channel 12 between the branch-off location 16 and the joining location 17 is substantially higher than the distance within the inlet channel 10 from the branch-off location 16 to the end of the geometric valve 1, i.e. an edge 26 of support element 3 and exceeds the length of the flow path of the liquid from the branch-off location 16 to the non-closing valve.

Fig. 4 shows a meniscus formed, preventing further flow through the inlet channel according to Fig. 3.

Due to the action of the non-closing valve 1, such as geometric valve the liquid 19 flowing in the inlet channel 10 is stopped. Due to capillary forces, which depend on the width or the diameter 13, respectively, of the trigger channel 12, some amount of liquid 19 is drawn into the trigger channel 12. The liquid flow between branch off location 16 and joining location 17 is stopped within channel 10 at the first meniscus 20. However liquid enters slowly into a trigger channel 12. A first meniscus 20 is formed in the region of the non-closing valve 1, such as a geometric valve. In this stage, no liquid 19 is present in the joining location 17 of the outlet channel 14.

Fig. 5 shows an amount of liquid flowing in the length of the trigger channel.

Due to the restricted width or diameter 13 of the trigger channel 12 the liquid 19 needs some time to flow towards the joining location 17 of the trigger channel 12 opening into the funnel-shaped area 18. The first meniscus 20 at the bottom of inlet channel 10 is still prevailing, the fluid flow between branch-off location 16 and joining location 17 is stopped, however liquid slowly enters into trigger channel 12. The liquid 19 stored within the trigger channel 12 has not reached the joining location 17 yet. As long as liquid 19 is present within the trigger channel 12, the main flow of liquid 19 within the inlet channel 10 before the branch-off location 16 is slowed down, when compared to the situation given according to figure 3. The flow of liquid 19 within the inlet channel 10 is dependent on the cross section 13 of the trigger channel 12. The narrower channel 12 is as compared to the channel 10, the slower the fluid flows.

Fig. 6 shows the liquid volumes in the trigger channel and the inlet channel joining each other forming a common meniscus towards the outlet channel.

In the stage given in Fig. 6, the liquid 19 stored within the trigger channel 12 has reached the joining location 17. Once the liquid 19 flows out of the trigger channel 12, a second, common meniscus 21 is formed. The liquid 19 consequently is pulled towards the outlet channel 14, having a width or diameter 15, respectively, which may correspond to the cross sections 11, 13 of the inlet channel 10 and the trigger channel 12, respectively. The two flows through the inlet channel 10 and the trigger channel 12 join each other and are drawn due to capillary forces into the outlet channel 14.

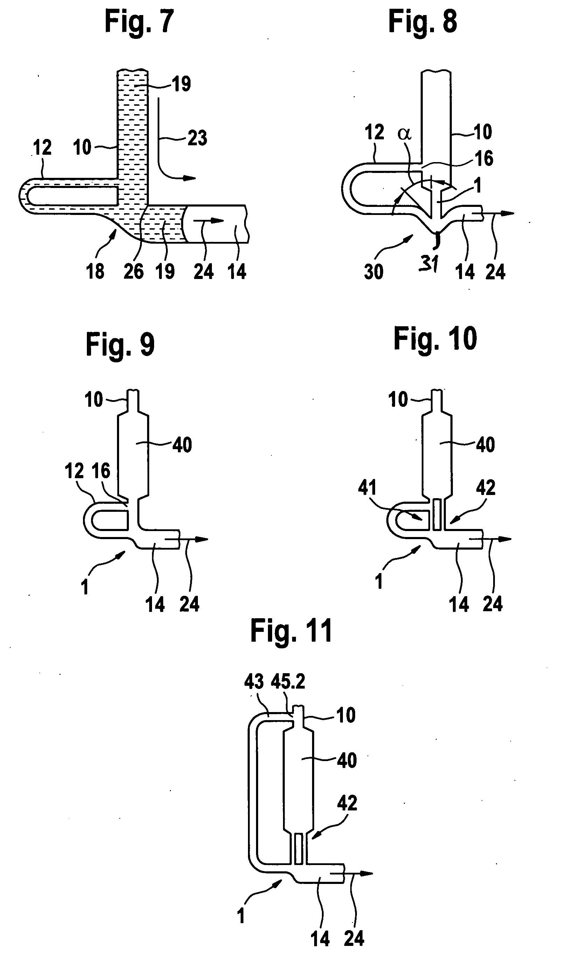

Fig. 7 shows an outlet flow of liquid through the outlet channel.

Once the flow through the trigger channel 12 has reached the joining location 17, opening into outlet channel 14 a main flow 23 of liquid 19 is generated having a flow direction as indicated by reference numeral 24. In the stage according to Fig. 7 the flow through inlet channel 10 has restarted again, whereas a partial volume of liquid 19 still flows within the trigger channel 12. In this stage the non-closing valve 1 at the bottom edge 26 of the inlet channel 10 is no longer active. If the flow resistance in the trigger channel 12 is chosen to be high, the portion of liquid flowing in the trigger channel is very low.

By controlling a flow rate of a liquid 19 in a microfluidic device with no external actuation or control elements the liquid flow can be slowed down considerably or even be stopped, thus increasing the residence time of liquid molecules for instance in a processing or functional chamber to improve the dissolution of dried reagents comprised in the functional chamber. Another significant advantage of the trigger channel 12 is a reliable joining of liquids from a multitude of channels, having a common inlet port, such as split inlet channels into one, common outlet channel as will be described in more detail below.

Fig. 8 shows a further alternative embodiment of an inlet channel and a trigger channel arrangement. In the alternative embodiment given in Fig. 8 the inlet channel 10 and the outlet channel 14 are connected to one another by means of a non-closing valve 1 which engages the outlet channel 14 in an arc-shaped recess portion 30 thereof. In the embodiment according to figure 8, the angle α between the non-closing valve 1 and the end of the trigger channel 12 is about 45°, whereas said angle α according to the embodiments given in figures 1 and 2, respectively is about 90°. The angle α between in the joining area of the trigger channel 12 and the non-closing valve 1 can be chosen depending on the properties of the system surface/liquid and other specific requirements, for example the size and the material of the substrate 3 or the like. The material of the substantially plane substrate 3 may be chosen from one of the below listed materials: polymeric materials (for example polycarbonate, polystyrol, Poly(methyl methacrylate) that may be replicated, etchable materials (for example silicon, steel, glass) or materials that may be milled conventionally (for example polycarbonate, polystyrol, Poly(methyl methacrylate, steel). The respective inlet channels 10, outlet channels 14 and the trigger channel 12 may be manufactured in silicon substrates by etching or plastic replication.

Figs. 9-12 show schematic embodiments of a microfluidic device provided with a functional chamber.

A functional chamber 40 may allow functions such as for dissolving dried reagents. To dissolve the dried reagents within the functional chamber 40 an increase of the residence time of the liquid molecules of the liquid 19 is advantageous. The functional chamber 40 further may serve the purpose to allow for chemical reactions, dissolving dry reagents, or for mixing up substances. A further function to be performed in the functional chamber 40 is the incubation, i.e. to lengthen the residence time of liquid. Depending on the system liquid 19/dried reagents the time interval within which said dried reagents are dissolved, may vary considerably. Thus, it is important to adapt the respective residence time of the mixture liquid 19 and dried reagents depending on the dissolving time of each system liquid 19/dried reagents. This is possible by varying the length of the trigger channel 12, which does itself not contain any non-closing valve, thus creating an unobstructed liquid flow path connecting the liquid supply compartment with the outlet channel 14.

The trigger channel 12, as described in connection with the embodiments according to Figs. 3-8 in greater detail above, allows a functional chamber 40 to be filled with a liquid 19. Once the liquid 19 reaches the non-closing valve 1, the flow rate into the functional chamber 40 is considerably lowered to allow for more time for specific functions to take place in the functional chamber 40 as mentioned above. The functional chamber 40 may be constituted as a simple liquid container or may contain an array of pillars or even may contain a number of liquid channels. It is further conceivable to form the first channel which is connected to a fluid supply as a functional chamber.

In the embodiment according to Fig. 9 by means of the inlet channel 10 the functional chamber 40 may be filled with a liquid 19. To the outlet of said functional chamber 40 according to the embodiment given in Fig. 9 a trigger channel 12 is assigned. The outlet of the functional chamber 40 constitutes the inlet with respect to the non-closing valve element 1 which is arranged below the functional chamber 40. At a branch-off location 16 the trigger channel 12 branches-off from the outlet downstream of the functional chamber 40. The trigger channel 12 joins the outlet channel 14 at a joining location below the geometric valve 1 given in greater detail in Figs. 3-7. Fig. 10 shows an embodiment of a functional chamber 40, the outlet of which is arranged as a plurality 42 of parallel channels 41 each having a non-closing valve. A pillar-array may be integrated within the functional chamber 40.

The trigger channel 12 joins the outlet channel 14 at the joining location 17 (see embodiments according to Figs. 3-7). Depending on the cross section 13 and the length of the trigger channel 12, the residence time of liquid 19 within the functional chamber 40 can be increased, e.g. to allow for performance of chemical reactions within the functional chamber 40, or in the alternative to allow for dissolving of dried reagents within the functional chamber 40 of the microfluidic device according to the present invention.

Fig. 11 shows a different embodiment of a microfluidic device, comprising a functional chamber 40. According to this embodiment, an elongated trigger channel 43 circumvents the functional chamber 40. The first circumventing trigger channel 43 branches-off at a second branch-off location 45 prior to the entry of the inlet channel 10 into a functional chamber 40. In this embodiment, the circumventing trigger channel 43 branches-off from the first channel 10 upstream of the functional chamber 40. The first circumventing trigger channel 43 joins the outlet channel 14 below an arrangement of parallel channels 42 having a non-closing valve element below the functional chamber 40. The first circumventing trigger channel 43 branching-off at the respective second branch-off location 45 allows for a branching-off of liquid, prior to the entry thereof into the functional chamber 40. The liquid 19 contained within the first circumventing trigger channel 43 does not contain any functionalized liquid of functional chamber 40, but rather is pure liquid 19. Consequently, the amount of liquid contained within the functional chamber 40 can be fully used without having any portion thereof to be branched-off into the respective trigger channel 12 as in the embodiments given in figures 9, 10, respectively.

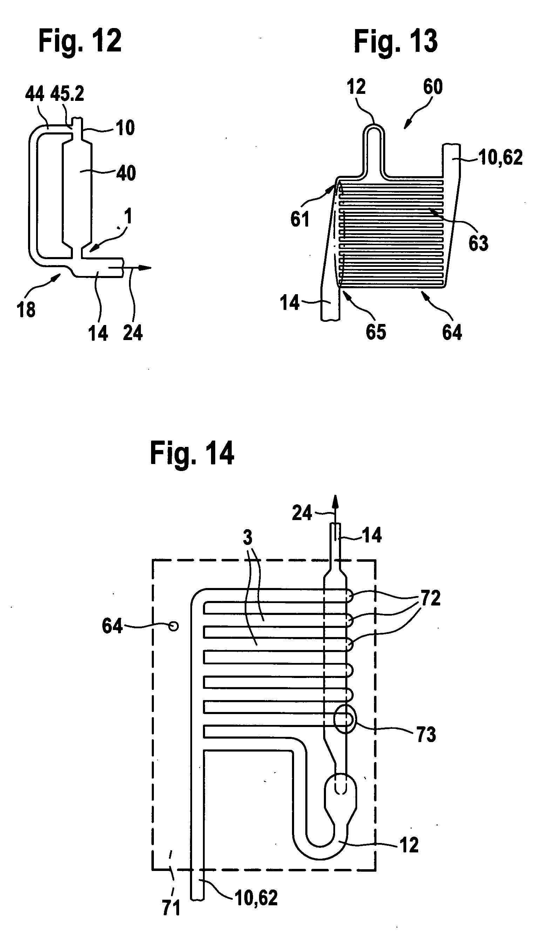

Fig. 12 shows a further embodiment of a functional chamber integrated into a microfluidic device according to the present invention.

In the embodiment according to Fig. 12 a second circumventing trigger channel 44 branches-off at second branch-off location 45 arranged above the entry of inlet channel 10 into the functional chamber 40, i.e. upstream of the functional chamber 40. The second circumventing trigger channel 44 joins the outlet channel 14 within an area 18. Within the outlet channel 14 of the functional chamber 40 according to the embodiment of Fig. 12 a non-closing valve 1 such as a geometric valve is integrated. Reference numeral 24 depicts the flow direction of the main flow from the functional chamber 40, once the second circumventing trigger channel 44 is entirely filled with the liquid 19.

Fig. 13 shows a planar design of a flow-splitter device according to the present invention. Reagents are often deposited in microfluidic channels as described above and are dissolved with a liquid 19. The speed of the dissolving procedure is limited by the diffusion of the involved molecules. Generally, in microfluidic systems there is no turbulent flow, i.e. the intermixing of molecules is process-limited mainly by diffusion. A further aspect is the solubility of the product of reagent and the solvent. With the flow-splitter devices according to the present invention the surface to volume ratio of a flow-splitter device, embodied as a microfluidic device can be significantly increased. With the embodiments of a flow-splitter device described in more detail below, an inlet channel generally is split into several channels which increases the surface to volume ratio. The solution according to the present invention offers the advantage to join the liquid 19 flowing in these splitted channels in one single outlet channel again in a controlled manner without introducing or producing bubbles within the outlet flow. Additionally, it slows down the liquid flow in the splitted channels.

The embodiment according to Fig. 13 shows a planar design which may by replicated in plastics as shown in greater detail. A first flow-splitter device is identified by reference numeral 60 and comprises an inlet channel 10, 62, respectively. The planar design according to Fig. 13 includes an array 64 of splitted channels 63. The splitted channels 63 extend substantially in parallel to one another. The first flow-splitter device 60 comprises the trigger channel 12. Each of the splitted channels 63 has at least one non-closing valve 65 located downstream of the branch-off of the second channel 12, i.e. the trigger channel. The trigger channel 12 re-unites with each of the splitted channels 63 of the array 64 downstream of the non-closing valves 65 to form an outlet channel 14. Each of the splitted channels 63 opens into a common outlet channel 14. The openings of each of the splitted channels 63 constitute a non-closing valve 65. The trigger point of the array 64 of splitted channels 63 is identified with reference numeral 61. Once the liquid 19 entering said first flows splitter device 60 and has entered into the trigger channel 12 and the respective splitted channels 63 the liquid in the respective splitted channels 63 stops at a non-closing valve 65 one of which is arranged at each end of the respective splitted channels 63. When liquid flow to trigger channel 12 reaches the trigger point 61, liquid flow begins in a sequential manner beginning in the splitted channel 63 which is arranged closest to the respective trigger point 61. The liquid 19 flowing - according to the embodiment given in figure 13 - in vertical direction downwards, fills said common outlet channel 14, the cross-section of which gradually increases in liquid flow direction out of said first flow splitter devices 60.

Fig. 14 shows a further embodiment of a flow-splitter device within which geometric stop valves are generated by means of overlapping.

The embodiment of a flow-splitter device according to Fig. 14 shows a common inlet channel 10, 62 respectively, which is split up into a plurality of splitted channels 63, forming a splitted channel array 64. The splitted channels 63 substantially extend in parallel to one another. The flow-splitter device according to Fig. 14 is in general a planar design which may be etched into a substrate 3 such as a very thin steel foil. In the embodiment according to Fig. 14 the substrate 3 such as a steel foil is etched on both sides thereof. Thus, the splitted channels 63 on one side of the foil 71 overlap etched channels on the rear-side on the foil 71 according to Fig. 14, thus forming overlapping regions 72 at the end of each splitted channel 63. In the overlapping region 72 which is arranged at the respective joining locations into a common outlet channel 14, geometric valves 73 are established. The array 64 of splitted channels 63 is connected to the common outlet channel 14 on the backside of the foil 71 by means of an opening connecting the trigger channel 12 arranged on the front side of the foil 71 with the common outlet channel 14 arranged on the respective other side of the foil 71. With this embodiment of a flow splitter device a change of planes i.e. from the front side to the rearside and vice versa can be achieved. Said single splitted channels 63 each comprise an end portion which is formed as a geometric (non-closing) valve 73.

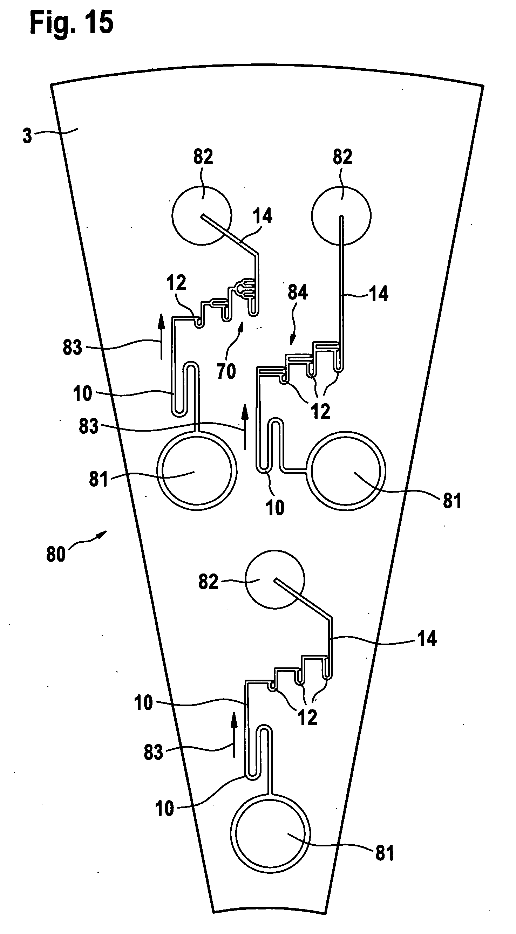

Fig. 15-17 show fluidic trigger structures to be replicated in plastics for fluidic evaluation.

Fig. 15 shows a support-structure 3 such as an injection moulded or hot embossed substrate or the like. On the top-side of the support-structure 3 according to Fig. 15 three different microfluidic systems are arranged.

On the support-structure section 3 shown in Fig. 15 the different microfluidic systems for evaluation of liquid are arranged. Each of the three systems comprises a liquid supply 81 and a liquid reservoir 82, respectively. Liquid is fed from the liquid supply 81 in flow direction 83 via the inlet channel 10 to a flow splitter device, which according to Fig. 15 is shaped in a cascade arrangement 84. To each of the stages of the cascade arrangement 84 an individual trigger-channel 12 is assigned to allow for bubble free flow via outlet channel 14 into the liquid reservoir 82. The branches, comprised in the cascade arrangement 84 according to Fig. 15 may vary between 2 and 4 each being triggered by a trigger channel 12 arranged to the respective cascade 84.

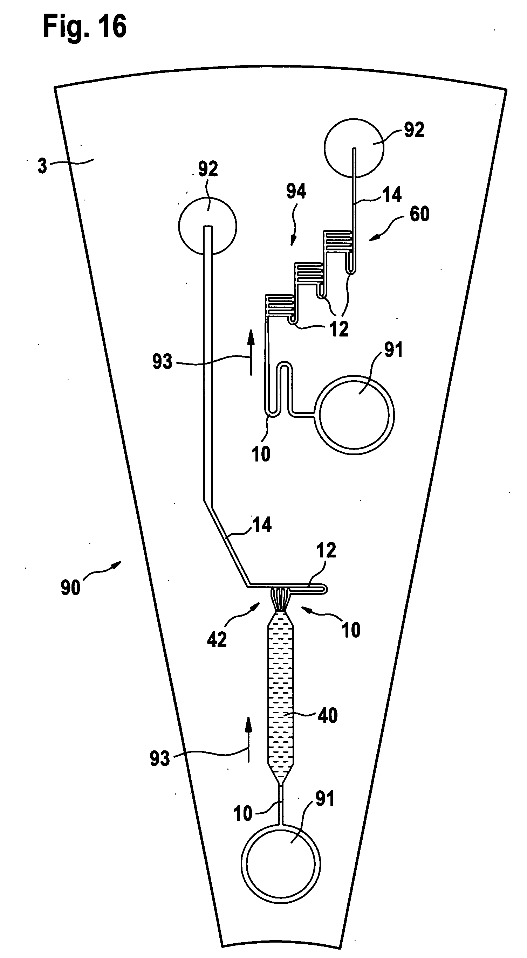

Fig. 16 shows a second liquid trigger structure according to the present invention arranged on a support-structure element 3.

The support-structure element 3 may be as previously mentioned a plastic material into which the microfluidic devices according to Fig. 16 may be replicated.

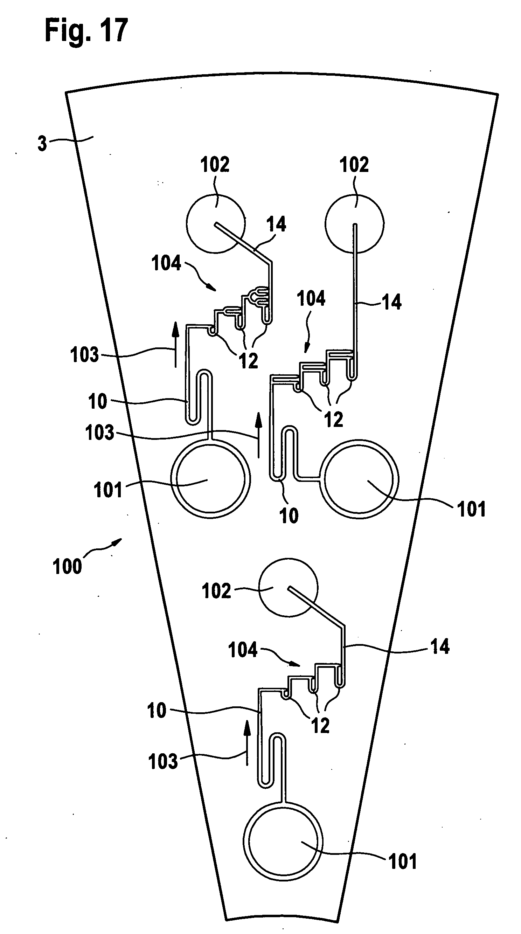

In contrast to the first fluidic trigger structure 80 according to Fig. 15, the second fluidic trigger structure 90 according to Fig. 16 comprises two microfluidic systems. One of the microfluidic systems given on the support-structure element 3 according to Fig. 16 comprises a functional chamber 40, which is fed by an inlet channel 10 from a liquid supply 91. The flow direction of the liquid is indicated by arrow 93. A portion of the liquid contained in the functional chamber 40 enters into the trigger channel 12 assigned to a series of four outlet channels (array 42) of the functional chamber 40 each of said outlet channels having a non-closing valve. The outlet of the functional chamber 40 constitutes the inlet with respect to the trigger channel 12. The length and the cross section of the trigger channel 12 assigned to the functional chamber 40 determines the residence time of the liquid 19 contained in the functional chamber 40. Further, in the embodiment of a second fluidic trigger structure 90 according to Fig. 16 a flow-split device 60 is integrated. From the liquid supply 91 liquid is fed in flow direction 93 via inlet channel 10 to a first flow-splitter device 60 having a cascade arrangement 94. Each of the cascades comprises four microchannels in parallel to one of which a trigger channel 12 is assigned to allow for bubble-free conveying of liquid to the reservoir 92. It should be understood, that each outlet of a previous cascade 84, 94, 104, constitutes the inlet for the following cascade of the cascade arrangement 94 of the first flow-splitter device 60 according to the embodiments given in Figs. 16, 17 respectively.

In the embodiment according to Fig. 17 a third liquid trigger structure according to the present invention is arranged on a support structure element 3.

According to this embodiment liquid contained within a liquid supply 101 flows via inlet channel 10 in flow direction 103 to a reservoir 102. Said inlet channel 10 is connected to a cascade arrangement 104 having 3 trigger channels 12 assigned thereto. According to the third liquid trigger structure 100 as given in Fig. 17 said substrate 3 comprises further trigger structures by means of which liquid from liquid supply 101 is transmitted to a reservoir 102. In one embodiment given on the substrate 3 according to Fig. 17 said cascade arrangement 104 comprises flow splitter devices to each of which a respective trigger channel 12 is assigned. On the right hand side on top of Fig. 17 a cascade arrangement 104 is shown which comprises two channels extending parallel to one another. According to this embodiment to each of said pair of channels extending substantially parallel to one another a separate trigger channel 12 is assigned.

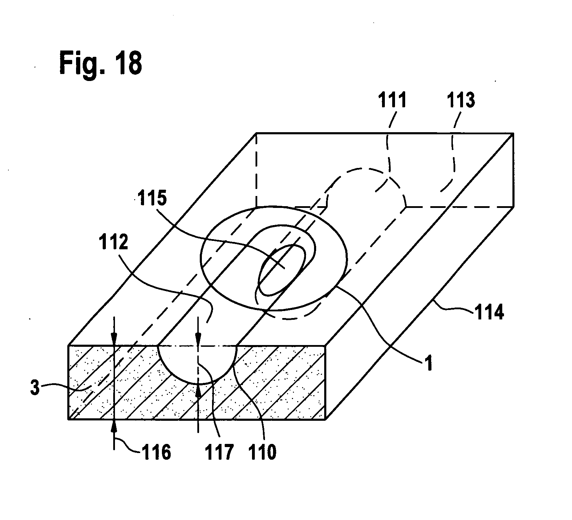

Fig. 18 schematically shows a non-closing valve as previously mentioned on page 13. According to the embodiment of a non-closing valve 1 a first channel 110 is etched into a front side 113 of a thin substrate 3 having a thickness 116. The first channel 110 is connected to a second channel 111 on the backside 114 of the thin substrate 3, made for instance of a very thin, etchable steel foil, a polyimide-foil or the like. The first channel 110 and the second channel 111 are connected to one another by an opening 115. The depth of the first channel 110 is identified by reference numeral 117. The second channel 111, etched on the respective backside 114 of the very thin substrate 3 has a similar depth.

Both the depth 117 of the first channel 110 and the depth of the second channel 111 are choosen that both channels 110, 111 establish a fluid communication, thus allowing for a transfer of liquid via opening 115 from the front side 113 of the very thin substrate 3 to the respective backside 114 thereof. The channels' surfaces are labelled 112.

The microfluidic devices according to the present invention may be used for processing human blood, liquor or other body fluid samples, aqueous solutions of reagents, liquids containing organic solutions or oil. Said microfluidic devices according to the present invention can be used for the extension of incubation time or reaction time, to allow for enhancing the residence time of liquid 19 to dissolve dried reagents, which are for example contained within the functional chamber 40.

| Reference Numeral List | | | |
|---|---|---|---|
| 1 | non-closing valve (geometric valve) | 43 | 1^{st} circumventing trigger channel |
| 2 | channel | 44 | 2^{nd} circumventing trigger channel |
| 3 | substrate | 45 | 2^{nd} branch-off location |
| 4 | constant width | | |
| 5 | first width | 60 | flow-splitter device |
| 6 | second width | 61 | trigger point |
| 7 | gap | 62 | inlet channel |
| 8 | first surface | 63 | splitted channel |
| 9 | second surface | 64 | array of splitted channels |
| 10 | inlet channel | 65 | geometric valve |
| 11 | width of inlet channel | | |
| 12 | trigger channel | | |
| 13 | width of trigger channel | 71 | foil |
| 14 | outlet channel | 72 | overlapping region |
| 15 | width of outlet channel | 73 | geometric valve |
| 16 | branch-off location | | |
| 17 | joining location | 80 | first fluidic trigger structure |
| 18 | funnel-shaped area | 81 | liquid supply |
| 19 | liquid | 82 | reservoir |
| 20 | 1^{st} meniscus | 83 | flow direction of the liquid |
| 21 | 2^{nd} (common) meniscus | 84 | cascade arrangement |
| 22 | slow flow of liquid 19 | | |
| 23 | main flow of liquid 19 | 90 | second liquidic trigger structure |
| 24 | outlet flow | 91 | liquid supply |
| | | 92 | reservoir |
| 26 | edge | 93 | flow direction |
| | | 94 | cascade-arrangement |
| 30 | recess | | |
| 31 | arc | 100 | third liquidic trigger structure |
| | | 101 | liquid supply |
| 40 | functional chamber | 102 | reservoir |
| 41 | parallel channels | 103 | flow direction |
| 42 | plurality of parallel channels with non closing valves | 104 110 | cascade arrangement first channel |
| | | 111 | second channel |
| | | 112 | channel surface |
| | | 113 | front side |
| | | 114 | backside |
| | | 115 | opening |
| | | 116 | thickness d of substrate |
| | | 117 | channel depth |

## Claims

1. Microfluidic device capable of conveying a liquid (19) by capillary forces the device comprising a microfluidic channel system (10, 12, 14; 43, 44; 63, 64) comprising
i) one liquid supply compartment (81, 91, 101);
ii) a first channel (10) connected to the liquid supply compartment (81, 91, 101)
and having at least one non-closing valve (1, 65, 73) located downstream of the liquid supply compartment (81, 91, 101);
iii) a second channel (12, 43, 44) that branches-off from the first channel (10) downstream of the liquid supply compartment (81, 91, 101) but upstream of the at least one non-closing valve (1, 65, 73) and that re-unites with the first channel (10) at the location of the non-closing valve (1, 65, 73) to form an outlet channel (14), **characterized in that**
the second channel (12, 43, 44) does not contain any non-closing or closing valve thus creating an unobstructed liquid flow path connecting the liquid supply compartment (81, 91, 101) with the outlet channel (14).

2. Microfluidic device according to claim 1, wherein the second channel (12, 43, 44) is a trigger channel to control the flow of liquids (19) from the first channel (10) to the outlet channel (14).

3. Microfluidic device according to claim 1, wherein the second channel (12, 43, 44) has a width or a diameter (13) which is smaller than the width or diameter of the first channel (10).

4. Microfluidic device according to claim 1, wherein the second channel (12, 43, 44) has a length exceeding the length of the flow pass to of the liquid (19) from the branch-off location to the non-closing valve (1, 65, 73).

5. Microfluidic device according to claim 1, wherein the non-closing valve (1, 65, 73) is a geometric valve.

6. Microfluidic device according to claim 1, wherein the first channel (10) and the outlet channel (14) are connected by the non-closing valve (1, 65, 73) and wherein the second channel (12, 43, 44) branches-off upstream of the non-closing valve (1) and joins the outlet channel (14) at the outlet of the non-closing valve (1, 65, 73).

7. Microfluidic device according to claim 1, wherein the functional chamber (40) is provided which comprises dried reagents.

8. Microfluidic device according to claim 7, wherein the second channel (12, 43, 44) branches-off from the first channel (10) upstream of the functional chamber (40).

9. Microfluidic device according to claim 7, wherein the second channel (12, 43, 44) branches-off from the first channel (10) downstream of the functional chamber (40).

10. Microfluidic device according to any of claims 7 to 9, wherein the second channel (12, 43, 44) joins the outlet channel (14) downstream of the functional chamber (40).

11. Microfluidic device according to claim 1, wherein the first channel (10, 62) is split into the second channel (12, 43, 44) and an array (64) of at least two splitted channels (63) each of the splitted channels (63) having at least one non-closing valve (1, 65, 73) located downstream of the branch-off of the second channel (12, 43, 44) and wherein the second channel (12, 43, 44) re-unites with each of the splitted channels (63) of the array (64) downstream of the non-closing valve (1, 65, 73) to form an outlet channel.

12. Microfluidic device according to claim 1, wherein the inlet channel (62) is split into an array (64) of splitted channels (63) arranged on both sides of a planar structure (71).

13. Microfluidic device according to claim 1, wherein geometric valves (73) are formed at the locations, where the splitted channels (63) on both sides of the planar support (71) overlap.
